Europäisches Patentamt

European Patent Office

Office européen des brevets

(19)

(11) **EP 0 984 653 A1**

(12) **DEMANDE DE BREVET EUROPEEN**

(43) Date de publication:
08.03.2000 Bulletin 2000/10

(51) Int Cl.⁷: **H04Q 7/38**

(21) Numéro de dépôt: **99402048.5**

(22) Date de dépôt: **12.08.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **03.09.1998 FR 9811018**

(71) Demandeur: **ALCATEL**
**75008 Paris (FR)**

(72) Inventeurs:
• **Antoine Jacgues**
**92320 Chatillon (FR)**

• **Wautier, Armelle**
**91190 Gif sur Yvette (FR)**
• **Brouet, Jéröme**
**75014 Paris (FR)**
• **Charriere, Patrick**
**Avon SN 154LS Wilts (GB)**

(74) Mandataire: **El Manouni, Josiane et al**
**COMPAGNIE FINANCIERE ALCATEL**
**Dépt. Propr. Industrielle,**
**30, avenue Kléber**
**75116 Paris (FR)**

(54) **Passage de la couche microcellulaire à la couche macrocellulaire dans un système à deux couches d'un réseau de télécommunications**

(57) L'invention concerne un procédé de communication avec un mobile (5) dans une cellule (1) d'un réseau de télécommunications cellulaire présentant une couche microcellulaire avec une pluralité de microcellules comprenant chacune au moins un relais (6, 7), et une couche macrocellulaire avec une macrocellule recouvrant une pluralité des dites microcellules, dans lequel une communication dans la couche microcellulaire s'effectue entre le mobile et un jeu de relais, d'un cardinal d'au moins deux, affecté à la communication, les relais du jeu affecté à une communication pouvant changer au cours de la communication.

Elle propose de transférer la communication de la couche microcellulaire à la couche macrocellulaire quant il n'est pas possible d'affecter à la communication un nombre de relais correspondant audit cardinal.

L'invention concerne aussi une station de base permettant la mise en oeuvre du procédé.

Fig. 1

EP 0 984 653 A1

## Description

L'invention concerne le domaine des réseaux de télécommunications mobiles ou réseaux de radiocommunications, et plus particulièrement, les réseaux mettant en oeuvre des transmissions numériques, en TDMA (accès multiple par répartition dans le temps, acronyme de l'anglais "Time division multiple access"). De façon connue en soi, de tels réseaux sont formés de cellules, comprenant chacune une station de base chargée d'assurer les communications avec les mobiles présents dans la cellule. Diverses normes ont déjà été définies pour les systèmes de télécommunications terrestres à terminaux mobiles, notamment les normes GSM, DCS 1800 ou PCS. Selon la norme GSM, chaque station terrestre (BTS pour les termes anglais "base transceiver station") émet dans une cellule des messages de signalisation sur un canal balise (acronyme BCCH pour les termes anglais "broadcast control channel"); ce canal balise sert en outre à l'identification de la cellule. Un canal RACH (acronyme de l'anglais "Random Access CHannel") est utilisé pour les messages de signalisation provenant des mobiles. Ce canal permet aux mobiles lors d'une phase d'initialisation d'une communication, d'émettre soit une requête (appel montant), soit un message d'acquittement (appel descendant).

L'invention concerne plus particulièrement les cellules à deux couches. De telles cellules présentent une couche macrocellulaire et une couche microcellulaire; dans de telles cellules, la couche macrocellulaire permet de gérer les mobiles au niveau de la cellule; la couche microcellulaire permet de gérer les mobiles au niveau d'une micro station de base ou micro-BTS; chaque micro-BTS radie avec une faible puissance dans la microcellule qu'elle définit, qui présente une taille typique de quelques centaines de mètres, par rapport à une taille typique de l'ordre du kilomètre pour une cellule ou macrocellule.

Un tel modèle et une telle structure des cellules permettent d'augmenter la capacité du trafic, ou de pallier les problèmes de transmission rencontrés dans des environnements urbains. Toutefois, l'amélioration qui en résulte est d'autant plus importante que les mobiles sont gérés dans la couche microcellulaire. Un objectif dans les cellules à antennes distribuées, est donc d'assurer autant que possible les transmissions avec les mobiles dans la couche microcellulaire. Il reste toutefois possible d'assurer les transmissions avec les mobiles dans la couche macrocellulaire. Pour le passage de la couche microcellulaire à la couche macrocellulaire, il a été proposé d'estimer la vitesse des mobiles, et d'utiliser cette vitesse pour la décision de passage de la microcellule à la macrocellule; dans ce cas, les mobiles fixes ou se déplaçant à faible vitesse sont gérés dans la couche microcellulaire, alors que les mobiles rapides sont gérés dans la couche macrocellulaire. Cette solution est par exemple décrite dans la recommandation ETSI référencée TS GSM 05.22 version 4.00. Cette recommandation propose d'évaluer la vitesse par le temps passé dans la cellule.

La demande de brevet française déposée le 08 septembre 1997 par la demanderesse sous le numéro 9711123 sous le titre "Station de base contrôlant les communications mises en oeuvre dans une cellule d'un réseau de radio-communications cellulaire et numérique et procédé de contrôle correspondant", qui n'est pas publiée à la date de dépôt de la présente demande, décrit un système à couverture radio distribuée. Dans cette demande, il est proposé que chaque cellule comprenne une pluralité de relais; en outre, les communications à destination d'un mobile de la cellule se voient affecter un jeu d'au moins deux relais. Les relais d'une même cellule utilisent les mêmes canaux BCCH et RACH.

La demande de brevet française déposée le 08 septembre 1997 par la demanderesse sous le numéro 9711125 sous le titre "Procédé de repérage d'une station mobile dans une cellule d'un réseau de radio-communications cellulaire et numérique", qui n'est pas publiée à la date de la présente demande, décrit un système à couverture radio distribuée. Dans cette demande, il est proposé que chaque cellule comprenne une pluralité de relais; elle propose de sélectionner un au moins des relais d'une cellule en fonction de la qualité d'une communication depuis un mobile, pour déterminer une position de ce mobile dans la cellule. Les relais d'une même cellule utilisent les mêmes canaux BCCH et RACH.

L'invention propose une solution au problème de la redirection du trafic depuis la couche microcellulaire vers la couche macrocellulaire dans des cellules distribuées. Elle permet de maximiser l'efficacité du trafic, et l'utilisation des ressources microcellulaires; elle assure aussi un bon taux de service GoS ("grade of service" en langue anglaise).

Plus précisément, l'invention propose un procédé de communication avec un mobile dans une cellule d'un réseau de télécommunications cellulaire présentant une couche microcellulaire avec une pluralité de microcellules comprenant chacune au moins un relais, et une couche macrocellulaire avec une macrocellule recouvrant une pluralité des dites microcellules, dans lequel une communication dans la couche microcellulaire s'effectue entre le mobile et un jeu de relais, d'un cardinal d'au moins deux, affecté à la communication, les relais du jeu affecté à une communication pouvant changer au cours de la communication, et dans lequel la communication est transférée de la couche microcellulaire à la couche macrocellulaire quant il n'est pas possible d'affecter à la communication un nombre de relais correspondant audit cardinal.

Avantageusement, le dit cardinal vaut 2.

Dans un mode de réalisation, la macrocellule comprend des moyens pour gérer l'équivalent d'un nombre $N_{macro}$ d'émetteurs récepteurs, et le dit nombre est choisi de sorte à ce que le taux de service soit inférieur ou égal à 2%.

L'invention concerne aussi une station de base pour une cellule d'un réseau de télécommunications, présentant une couche microcellulaire avec une pluralité de microcellules comprenant chacune au moins un relais, et une couche macrocellulaire avec une macrocellule recouvrant une pluralité des dites microcellules, des moyens d'affectation à une communication dans la couche microcellulaire d'un jeu de relais, d'un cardinal d'au moins deux, affecté à la communication, les dits moyens d'affectation affectant des relais différents à un mobile en déplacement, la station de base comprenant en outre des moyens de transfert d'une communication de la couche microcellulaire à la couche macrocellulaire quand il n'est pas possible d'affecter à la communication un nombre de relais correspondant audit cardinal.

De préférence, le cardinal vaut 2.

Dans un mode de réalisation, la couche comprend des moyens pour gérer l'équivalent d'un nombre $N_{macro}$ d'émetteurs récepteurs, et en ce que le dit nombre est choisi de sorte à ce que le taux de service soit inférieur ou égal à 2%.

D'autres caractéristiques et avantages de l'invention apparaîtront à la lecture de la description qui suit de modes de réalisation de l'invention, donnée à titre d'exemple et en référence aux dessins annexés qui montrent:

- figure 1. une représentation schématique d'une cellule à relais distribués dans laquelle l'invention est mise en oeuvre;
- figure 2, une représentation schématique d'une cellule utilisée pour l'évaluation des résultats de l'invention;
- figure 3 à 5, des graphes de trafic par relais selon l'invention.

Dans la suite de la description, l'invention est décrite en référence au cas particulier du GSM, et pour une affectation de chaque communication à un jeu de deux antennes ou relais, comme décrit dans la demande de brevet précitée de la demanderesse. L'invention s'applique aussi à d'autres types de réseaux, ou au cas d'affectation de plus de deux relais par communication. Elle est particulièrement appropriée au cas décrit ci-dessous de microcellules présentant une pluralité de relais, comme dans les demandes de brevet 971 1 123 et 971 1 125 précitées.

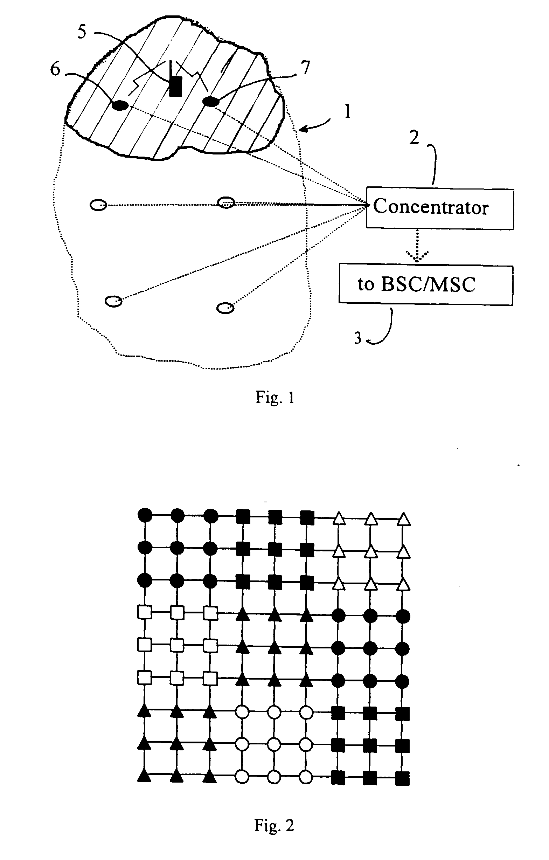

La figure 1 montre une représentation schématique d'une microcellule d'une cellule à relais distribués dans laquelle l'invention est mise en oeuvre; la microcellule 1 de la figure 1 présente un concentrateur 2 et une pluralité de relais ou antennes - 6 dans le cas de la figure 1 - qui sont reliés au concentrateur 2. L'ensemble des relais et du concentrateur forme la microstation de base de la microcellule.

Est en outre représenté à la figure 1, le contrôleur 3 de la station de base BSC (acronyme de l'anglais "Base station controller") de la macrocellule, auquel est relié le concentrateur 2 de la microcellule.

On a représenté sur la figure 1 un mobile 5; la communication avec le mobile 5 est affecté à un groupe de deux relais formé des deux relais 6 et 7, représentés en noir sur la figure. Ces deux relais sont actifs pour cette communication, et définissent une zone de couverture représentée en grisé sur la figure 1. Pour la communication avec le mobile 5, les autres relais, représentés en blanc sur la figure 1, sont inactifs.

Cette solution permet à tout instant de localiser le mobile 5 à l'intérieur de la cellule, en fonction du jeu de relais auquel la communication avec le mobile est affecté. Dans l'exemple de la figure 1, comme expliqué plus haut, le mobile 5 se trouve dans la zone grisée lorsque la communication est affectée aux deux relais 6 et 7.

Lors de l'établissement de la communication, les appels montants ou descendants sont gérés dans la couche microcellulaire; on peut utiliser pour cela une stratégie d'allocation des ressources connue en soi, sans que ceci n'intervienne sur la mise en oeuvre de l'invention. On peut notamment utiliser la stratégie de sélection des canaux décrite dans P. Charrière et J. Brouet, "Optimum channel selection strategies for mobility management in high traffic TDMA based networks with distributed coverage", ICPWC'97, Décembre 1997. La communication peut aussi provenir d'une cellule voisine, et résulter d'un transfert ou négociation vers un ou plusieurs relais de la cellule en cause. Dans un cas comme dans l'autre, l'affectation de la communication à un jeu de relais permet de définir une zone dans laquelle se trouve le mobile, i. e. en d'autres termes de déterminer une position du mobile dans la cellule.

En cours de communication, le mobile 5 peut changer de zone, lorsque le jeu de relais auquel est affecté la communication change. Un mécanisme possible pour déterminer la nécessité d'un changement de zone ou d'un changement de jeu de relais est décrit dans la demande de brevet précitée de la demanderesse, et consiste à écouter la communication sur plusieurs relais sur la liaison montante, et à comparer la qualité de la réception sur les différents relais, de sorte à sélectionner un jeu de relais. Cette solution permet d'affecter un autre jeu de deux relais à une communication lorsque le mobile se déplace.

L'invention propose de transférer la communication de la couche microcellulaire à la couche macrocellulaire lorsqu'il n'est plus possible d'affecter deux relais à une communication avec un mobile. Ceci revient à passer dans la couche macrocellulaire lorsque les ressources dans la couche microcellulaire sont insuffisantes pour assurer une couverture multisite du mobile.

Par rapport à l'art antérieur, l'invention propose donc de ne pas prendre en compte la vitesse de déplacement, mais les ressources disponibles dans le réseau. Elle permet d'exploiter pleinement les capacités de négociation ou de transfert dans la couche microcellulaire, et d'utiliser pleinement les ressources de la couche microcellulaire, en ne redirigeant la communication vers la couche macrocellulaire qu'à défaut de ressources.

La figure 2 montre une représentation schématique d'une cellule utilisée pour l'évaluation des résultats de l'invention; la cellule couvre un environnement urbain du type de celui de Manhattan, avec des rues perpendiculaires, distantes de 100 m. La cellule est composée de neuf microcellules, qui présentent chacune neuf relais, et un concentrateur. Chaque relais peut fournir l'équivalent d'un émetteur récepteur TRx, soit huit fenêtres temporelles TS (acronyme de l'anglais "time slot"). Chaque concentrateur est susceptible de gérer l'équivalent de $N_{seq}$ émetteurs récepteurs; la macrocellule recouvre toute la zone de service, et peut gérer l'équivalent de $N_{macro}$ émetteurs récepteurs.

La simulation est mise en oeuvre dans le réseau de la figure 2 en utilisant des modèles de propagation connus, qui permettent de rendre compte de la communication en ligne directe ("line of sight communication" en langue anglaise) et de la communication sans ligne directe ("non line of sight communication" en langue anglaise). On règle les distances entre relais et les puissances d'émission de sorte à ce que chaque fenêtre temporelle d'un relais soit susceptible de fournir un canal sans interférences pour chaque mobile. On peut à cet effet utiliser la solution proposée dans Y. Bégassat et V. Kumar, "Interference analysis of an original TDMA-based high density cellular radio network", VTC'98, Mai 1998. On suppose par ailleurs qu'existe une couverture complète de la macrocellule.

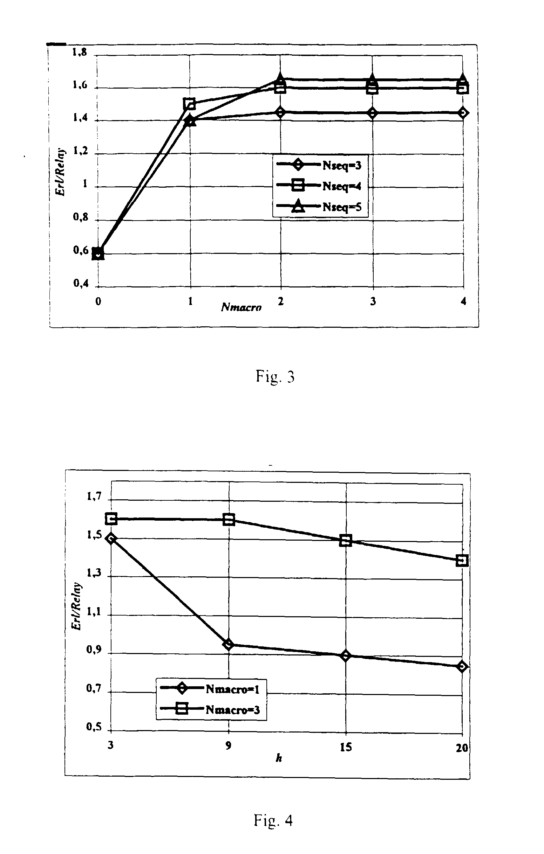

Les figures 3 à 5 montrent les résultats d'une simulation dans un tel réseau, sous les hypothèses suivantes de trafic par mobile et de population des mobiles. On ne considère pour plus de simplicité que du trafic voix, avec des appels arrivant suivant une loi de Poisson, et des durées d'appels suivent une loi exponentielle négative. Chaque mobile génère en moyenne chaque heure un appel d'une durée de 120 s, soit une charge de 33 mErl par mobile. Avec ces hypothèses de trafic, on considère une population de mobiles, dans laquelle 70% des mobiles sont fixes et dans laquelle les mobiles restants sont en mouvement à la même vitesse. A chaque intersection, un mobile en mouvement peut continuer dans la même direction, ou tourner à droite ou à gauche, avec la même probabilité.

On considère pour les graphes des figures 3 à 5 un taux de service GoS défini de façon connue en soit comme la somme de la probabilité de blocage $P_b$ et de 10 fois la probabilité de perte d'appel $P_{fct}$:

$$GoS = P_b + 10.P_{fct}$$

Un appel est bloqué en l'absence de ressources physiques pour un appel entrant, autrement dit lorsque les relais dans la zone où se trouve le mobile, ainsi que les ressources au niveau de la macrocellule sont saturées. n y a perte d'appel si le transfert ou la négociation échoue, ou si le transfert du niveau de la microcellule au niveau de la macrocellule échoue. On considère pour le taux de service GoS une valeur cible de 2% pour un système extérieur, et donc, dans les figures, une probabilité de blocage inférieure à 1% et une probabilité de perte d'appel inférieure à 0,1%.

Sous ces hypothèses, la figure 3 montre un graphe du trafic par relais en fonction du nombre Nmacro d'équivalents émetteurs récepteurs que peut gérer une macrocellule. En ordonnées figure donc le trafic par relais, en Erlang par relais. En abscisses figure le nombre $N_{macro}$. La courbe en losanges correspond à un nombre $N_{seq}$ = 3, et la courbe en rectangles correspond à un nombre $N_{seq}$ = 4, tandis que la courbe en ronds correspond à un nombre $N_{seq}$ = 5. On a considéré pour le graphe de la figure 3 une vitesse h de 3, soit dans le modèle de 9 km/h.

La figure 3 montre que l'on obtient selon l'invention une valeur de trafic par relais dans la couche microcellulaire de 1,6 Erlang par relais, à partir d'une valeur de $N_{macro}$ de 2, et ce quel que soit la valeur du nombre $N_{seq}$.

La figure 4 montre des graphes analogues, mais en fonction de la vitesse des mobiles. Les abscisses donnent donc la vitesse, en terme de nombre de zones traversées pendant la durée de l'appel. La courbe en ronds correspond à un nombre $N_{macro}$ = 1, et la courbe en rectangles correspond à un nombre $N_{macro}$ = 3; la valeur $N_{seq}$ est indifférente, et est de 4 pour les calculs de la figure 4.

La figure 4 montre que le trafic par relais diminue fortement - d'environ 40% - lorsque la vitesse passe de h = 3 ou 9 km/h à h= 15 soit 45 km/h, pour une valeur $N_{macro}$ de 1. En revanche, pour une valeur de $N_{macro}$ de 3, la variation du trafic par relais pour des variations analogues de la vitesse ne sont plus que de l'ordre de 6%. De nouveau, dans ce cas de la figure 4, un choix approprié du nombre d'émetteurs récepteurs équivalents que peut gérer la cellule permet de limiter l'influence de la vitesse des mobiles. L'invention est donc d'une application particulièrement fructueuse à des zones urbaines dans lesquelles la densité de mobile est importante, et dans lesquelles les vitesses peuvent varier; l'invention est donc adaptée à des zones de circulation automobile en ville.

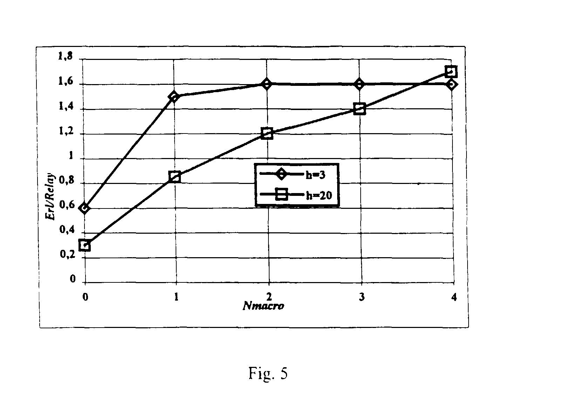

La figure 5 montre des graphes du trafic en fonction du nombre $N_{macro}$, porté en abscisses, pour diverses valeurs de la vitesse. La courbe en carrés représente le cas h = 20, soit une vitesse de 60 km/h et la courbe en rond le cas h = 3, soit 9 km/h. On constate de nouveau que les valeurs du trafic par relais sont sensiblement identiques, pour des valeurs de $N_{macro}$ de l'ordre de 4. Pour les calculs de la figure 5, on a fixé le nombre $N_{seq}$ à 4.

Les graphes des figures 3 à 5 montrent que l'invention permet d'optimiser le trafic par relais, pour des hypothèses de trafic données, pour une population de mobiles donnée, et pour une architecture de réseau donnée. Plus exactement, elle permet tout en conservant le même taux de service, d'optimiser l'utilisation des ressources et de fournir un trafic maximal, grâce à un choix approprié des ressources de la cellule.

L'invention propose donc de choisir d'équivalents émetteurs récepteurs que peut gérer la couche macrocellule, de sorte à assurer que le taux de service GoS soit inférieur ou égal à 2%, en optimisant le trafic par relais. La valeur du GoS se mesure en évaluant de façon connue en soi la probabilité de blocage et la probabilité de perte d'appel.

Bien entendu, la présente invention n'est pas limitée aux exemples et modes de réalisation décrits et représentés, mais elle est susceptible de nombreuses variantes accessibles à l'homme de l'art. On comprend que l'invention peut être mise en oeuvre pour des configurations de réseau différentes de celles décrites, ou peut fournir des résultats différents de ceux obtenus en référence aux figures pour des hypothèses de trafic ou de population de mobiles distinctes. Elle s'applique en outre non seulement au cas d'affectation de deux mobiles à une communication donnée, mais plus généralement au cas d'affectation d'un jeu de relais à une communication: on passe alors de la couche microcellulaire à la couche macrocellulaire lorsque les ressources ne permettent plus d'affecter à une communication un jeu complet de relais.

## Revendications

1. Un procédé de communication avec un mobile (5) dans une cellule (1) d'un réseau de télécommunications cellulaire présentant une couche microcellulaire avec une pluralité de microcellules comprenant chacune au moins un relais (6, 7), et une couche macrocellulaire avec une macrocellule recouvrant une pluralité des dites microcellules, dans lequel une communication dans la couche microcellulaire s'effectue entre le mobile et un jeu de relais, d'un cardinal d'au moins deux, affecté à la communication, les relais du jeu affecté à une communication pouvant changer au cours de la communication, et dans lequel la communication est transférée de la couche microcellulaire à la couche macrocellulaire quant il n'est pas possible d'affecter à la communication un nombre de relais correspondant audit cardinal.

2. Le procédé selon la revendication 1, caractérisé en ce que le dit cardinal vaut 2.

3. Le procédé selon la revendication 1 ou 2, caractérisé en ce que la macrocellule comprend des moyens pour gérer l'équivalent d'un nombre ($N_{macro}$) d'émetteurs récepteurs, et en ce que le dit nombre est choisi de sorte à ce que le taux de service soit inférieur ou égal à 2%.

4. Une station de base pour une cellule (1) d'un réseau de télécommunications, présentant une couche microcellulaire avec une pluralité de microcellules comprenant chacune au moins un relais (6, 7), et une couche macrocellulaire avec une macrocellule recouvrant une pluralité des dites microcellules, des moyens d'affectation à une communication dans la couche microcellulaire d'un jeu de relais, d'un cardinal d'au moins deux, affecté à la communication, les dits moyens d'affectation affectant des relais différents à un mobile en déplacement, la station de base comprenant en outre des moyens de transfert d'une communication de la couche microcellulaire à la couche macrocellulaire quand il n'est pas possible d'affecter à la communication un nombre de relais correspondant audit cardinal.

5. La station de base selon la revendication 4, caractérisée en ce que le cardinal vaut 2.

6. La station selon la revendication 4 ou 5, caractérisée en ce que la couche comprend des moyens pour gérer l'équivalent d'un nombre ($N_{macro}$) d'émetteurs récepteurs, et en ce que le dit nombre est choisi de sorte à ce que le taux de service soit inférieur ou égal à 2%.

Fig. 1

Fig. 2

Fig. 3

Fig. 4

Fig. 5

Office européen
des brevets

**RAPPORT DE RECHERCHE EUROPEENNE**

Numéro de la demande

EP 99 40 2048

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | WO 97 13386 A (ERICSSON TELEFON AB L M) 10 avril 1997 (1997-04-10) * page 3, ligne 25 - page 4, ligne 26 * * page 11, ligne 20 - page 13, ligne 28 * * page 14, ligne 17 - page 16, ligne 14 * --- | 1,2,4,5 | H04Q7/38 |
| Y | EP 0 526 436 A (ERICSSON TELEFON AB L M) 3 février 1993 (1993-02-03) * colonne 2, ligne 23 - ligne 48 * * colonne 5, ligne 11 - ligne 44 * --- | 1,2,4,5 | |
| A | MOULY M ET AL: "THE GSM SYSTEM FOR MOBILE COMMUNICATIONS" août 1993 (1993-08) , GSM SYSTEM FOR MOBILE COMMUNICATIONS, PAGE(S) 616-628 , MOULY M;PAUTET M-B XP002101320 * page 616, ligne 13 - page 620, ligne 5 * * page 623, ligne 17 - page 625, ligne 2 * * page 627, ligne 2 - page 628, ligne 28 * ----- | 3,6 | |

| | | | DOMAINES TECHNIQUES RECHERCHES (Int.Cl.7) |
|---|---|---|---|
| | | | H04Q |

Le présent rapport a été établi pour toutes les revendications

| Lieu de la recherche | Date d'achèvement de la recherche | Examinateur |
|---|---|---|
| LA HAYE | 14 septembre 1999 | Pecci, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 99 40 2048

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

14-09-1999

| Document brevet cité au rapport de recherche | Date de publication | Membre(s) de la famille de brevet(s) | Date de publication |
|---|---|---|---|
| WO 9713386 A | 10-04-1997 | US 5903834 A | 11-05-1999 |
| | | AU 7232896 A | 28-04-1997 |
| | | CA 2233037 A | 10-04-1997 |
| | | CN 1203008 A | 23-12-1998 |
| | | EP 0853862 A | 22-07-1998 |
| EP 0526436 A | 03-02-1993 | SE 468696 B | 01-03-1993 |
| | | AU 650543 B | 23-06-1994 |
| | | AU 1835192 A | 24-12-1992 |
| | | DE 69221405 D | 11-09-1997 |
| | | DE 69221405 T | 29-01-1998 |
| | | HK 1001949 A | 17-07-1998 |
| | | JP 5191341 A | 30-07-1993 |
| | | SE 9101910 A | 21-12-1992 |
| | | US 5392453 A | 21-02-1995 |

EPO FORM P0460

Pour tout renseignement concernant cette annexe : voir Journal Officiel de l'Office européen des brevets, No.12/82